# DEMANDE DE BREVET EUROPEEN

(11) **EP 4 372 488 A1**
(43) Date de publication de la demande: **22.05.2024**
(21) Numéro de dépôt: 22208083.0
(22) Date de dépôt: 17.11.2022
(51) Int. Cl.: G04D 1/00

(54) **DISPOSITIF PRÉHENSEUR DE MAINTIEN, CENTRAGE ET/OU SERRAGE EN PINCE D'UN COMPOSANT DE MICROMÉCANIQUE OU D HORLOGERIE, ET PROCÉDÉ DE FIXATION ASSOCIÉ**

(71) Demandeur: ETA SA Manufacture Horlogère Suisse, 2540 Grenchen (CH)
(72) Inventeur: DONZÉ, Christophe, 2542 Pieterlen (CH); PHAM, Patric, 3427 Utzenstorf (CH)
(74) Mandataire: ICB SA

(57) **Abrégé**

Un aspect de l'invention concerne un dispositif préhenseur (100) de maintien, centrage, et/ou serrage d'un composant (200) de micromécanique ou d'horlogerie dans une chambre délimitée par une pince comportant au moins un mors mobile (2), où au moins une partie des mors mobiles (2) comporte une surface de référence (20) pour un appui frontal d'un composant (200), et ce dispositif préhenseur (100) comporte un générateur de dépression (60) pour faire le vide dans la chambre de serrage. L'invention concerne encore un procédé de fixation d'un composant (200) de micromécanique ou d'horlogerie dans la chambre de serrage d'un tel dispositif préhenseur (100) selon lequel on dispose ledit composant (200) sur ladite surface de référence (20), puis on effectue un premier maintien par dépression, puis un deuxième maintien de couple supérieur à celui dudit premier maintien par pivotement des mors mobiles (2).

## Description

### Domaine technique de l'invention

L'invention concerne un dispositif préhenseur de maintien, centrage, et/ou serrage en pince d'un composant de micromécanique ou d'horlogerie dans une chambre de serrage délimitée par une pince comportant au moins un mors mobile.

L'invention concerne encore un procédé de fixation d'un tel composant de micromécanique ou d'horlogerie dans la chambre de serrage que comporte un tel dispositif préhenseur.

L'invention concerne le domaine de la micromécanique, le positionnement et le serrage des composants lors d'une étape de fabrication, ou encore le positionnement et le serrage des outils lors d'une étape de fabrication.

### Arrière-plan technologique

Le positionnement très précis de composants de micromécanique, notamment d'horlogerie, dans des outillages de fabrication, est toujours délicat. Il est nécessaire de concilier ce positionnement précis avec un serrage adéquat, sans induire de déformation inappropriée. Le problème est similaire pour le positionnement et le maintien des micro-outils utilisés dans les opérations de fabrication, et nécessite souvent un indexage angulaire parfait.

Parmi les moyens de serrage existants, on connaît de nombreuses variantes de mandrins à pinces, ces pinces étant élastiques ou articulées pour maintenir le composant. En particulier, dans les moyens de serrage conventionnel, il est très fréquent en horlogerie d'utiliser des serrages de type pince « Ottet ». Ce type de serrage permet de serrer des composants en ouvrant ou en fermant des segments de pince qui se déforment de manière élastique, en général sous l'action combinée selon une direction axiale d'un système vis-écrou, d'un moyen de rappel élastique tel qu'un ressort, d'un poussoir tel une bille ou similaire en appui sur ce moyen de rappel élastique, et d'un cône fermant ou ouvrant coopérant avec des secteurs à profil conique ou arrondi, que comportent les segments. Ces segments sont prévus pour être usinés, la plupart du temps intérieurement, afin d'épouser au mieux les contours du composant à serrer, et ils peuvent être usinés en place dans la machine pour un maximum de précision. La pince est elle-même montée sur une palette qui peut être serrée/desserrée sur un dispositif de serrage automatique équipant généralement le diviseur d'une machine d'usinage. Le principe de serrage par cône d'une telle pince est décrit dans le document EP1602426B1.

Toutefois, comme les segments doivent pivoter pour serrer le composant, il n'existe pas d'appui de référence fixe dans l'espace afin d'assurer la hauteur et la localisation des composants. En d'autres termes, si un composant est serré avec ce type de pince, il est difficile de garantir sa position, tant axiale que radiale, avec précision. Il suffit par exemple que le composant ne possède pas tout-à-fait les mêmes dimensions, ou que le frottement entre les différents segments et le cône de serrage change, pour que la position relative du composant par rapport à la pince soit légèrement modifiée. Ce problème est d'autant plus important pour un usinage de reprise qui nécessite d'usiner des opérations de manière localisée par rapport à des précédentes opérations.

Lorsqu'un appui de précision est nécessaire, il n'est généralement plus possible d'utiliser ce type de pince élastique standard, car l'espace à disposition au centre du serrage est réservé aux composants mécaniques qui transmettent les efforts de serrage/desserrage.

Par conséquent, pour ces cas de figure, des solutions plus personnalisées sont généralement requises et donc moins flexibles, plus encombrantes, et plus onéreuses.

Un autre problème est le maintien après une opération d'usinage d'un composant usiné détouré dans un composant brut, lequel seul reste maintenu dans les pinces.

On remarque, encore, qu'avec la tendance à la miniaturisation des machines d'usinage de micromécanique, il est aujourd'hui nécessaire de construire des moyens de serrage toujours plus compacts qui garantissent toutes les fonctionnalités souhaitées, la rigidité et la précision nécessaires.

### Résumé de l'invention

L'invention se propose d'améliorer le positionnement et le serrage d'un composant, ou d'un outil, de micromécanique ou d'horlogerie, dans un dispositif préhenseur, avec incorporation dans ce dernier d'un maintien par dépression, complémentaire à un serrage mécanique classique, ou se substituant à un tel serrage. A cet effet, l'invention concerne un dispositif préhenseur de maintien, centrage, et/ou serrage d'un composant de micromécanique ou d'horlogerie selon la revendication 1.

La présente invention peut ainsi résoudre ce problème par la modification d'une pince standard issue du négoce, d'un modèle reconnu et répandu, ce qui rend très économique la fabrication d'un dispositif préhenseur selon l'invention. De plus une telle modification ne modifie pas l'encombrement extérieur de la pince.

Le problème du maintien d'un composant usiné détouré dans un composant brut maintenu en pinces, peut, quant à lui, être résolu par un tel préhenseur comportant des moyens de maintien par dépression. Toutefois, une pince standard est dépourvue d'un tel système, alors qu'il est nécessaire, après détourage, de maintenir un tel composant usiné, d'augmenter la force de maintien de ce composant usiné, et de le maintenir en position. En effet, après détourage, la pince peut continuer à serrer la partie restante du composant brut ; le composant usiné lui-même n'est plus serré, que la pince soit serrée ou non.

La présente invention résout également ce problème et permet d'amener du vide au niveau du composant à maintenir, également sur la base d'une pince standard modifiée.

Un autre aspect de l'invention concerne un procédé de fixation d'un tel composant de micromécanique ou d'horlogerie dans la chambre de serrage que comporte un tel dispositif préhenseur.

### Brève description des figures

Les buts, avantages et caractéristiques de l'invention apparaîtront mieux à la lecture de la description détaillée qui va suivre, en référence aux dessins annexés, où :

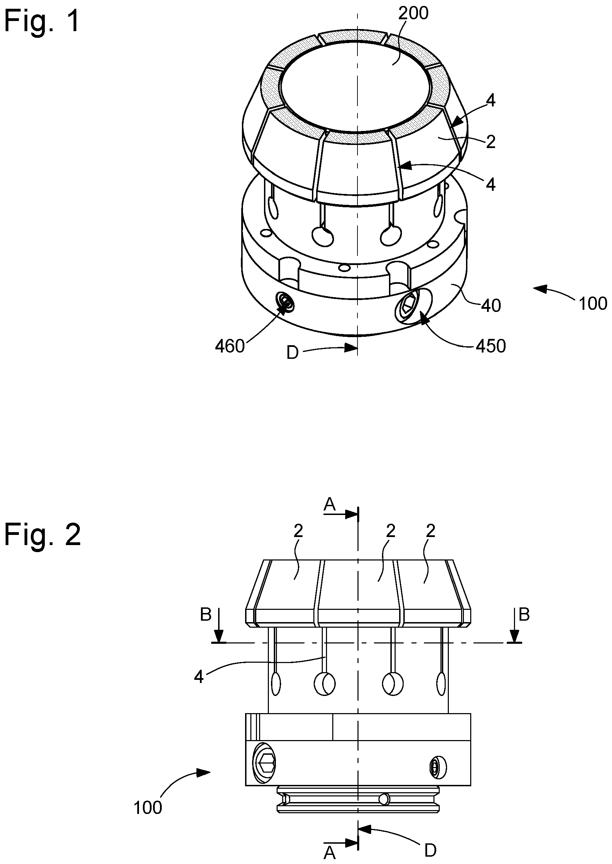

- la figure 1 représente, de façon schématisée et en perspective, un dispositif préhenseur selon l'invention, réalisé sur la base d'une pince élastique du négoce comportant une pluralité de mors séparés par des fentes ; cette pince élastique est de type à serrage sensiblement concentrique autour d'un axe de pince ; cette pince ne comporte que des mors mobiles ;
- la figure 2 représente, de façon schématisée et en vue de côté, le dispositif préhenseur de la figure 1 ;

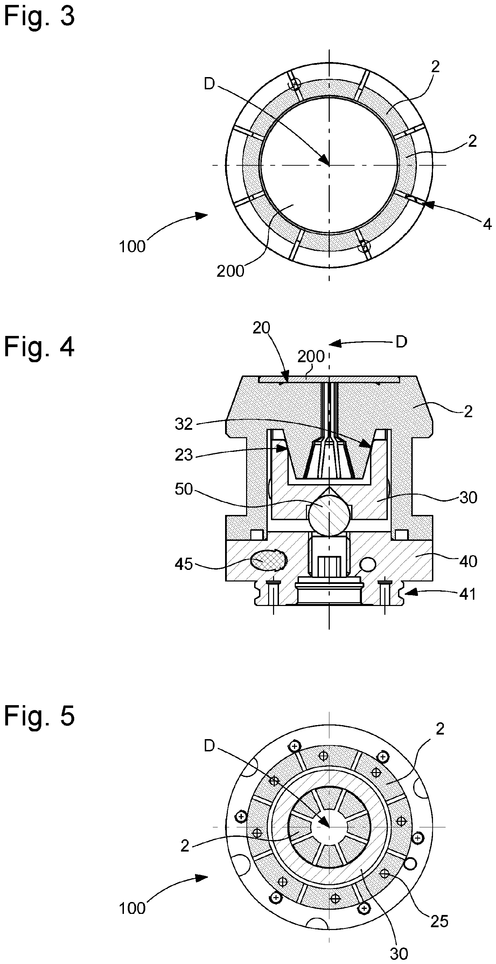

- la figure 3 représente, de façon schématisée et en vue de dessus, le dispositif préhenseur de la figure 1 ;
- la figure 4 représente, de façon schématisée et en vue en coupe selon la coupe A-A définie par la figure 2, le dispositif préhenseur de la figure 1 ; on voit, dans la palette, des canaux de passage d'air, et une portion d'une chambre de logement d'un venturi faisant générateur de dépression ; les extrémités supérieures des mors mobiles sont agencées pour porter et serrer le composant à positionner et à serrer ;
- la figure 5 représente, de façon schématisée et en vue en coupe selon la coupe B-B définie par la figure 2, le dispositif préhenseur de la figure 1 ; on voit l'ensemble des mors mobiles, qui comportent tous des cônes d'actionnement ; on distingue également des canaux du circuit de dépression pour le maintien du composant par dépression sur les extrémités frontales des mors mobiles ;

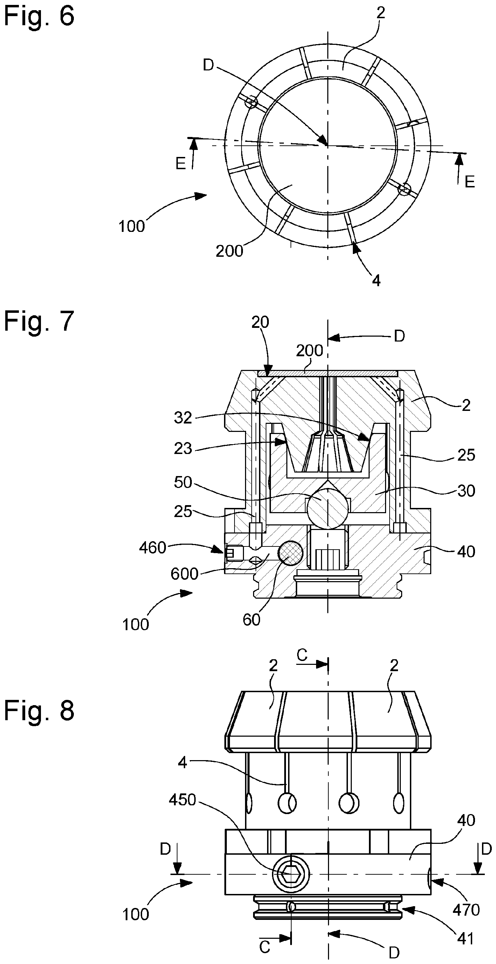

- la figure 6 représente, de façon similaire à la figure 3, le dispositif préhenseur de la figure 1 après pivotement des mors ;
- la figure 7 représente, de façon similaire à la figure 4, le dispositif préhenseur de la figure 1 en vue en coupe selon la coupe E-E définie par la figure 6, et montre les mors mobiles et un canal du circuit de dépression communiquant avec la zone d'aspiration créée par le venturi visible en partie basse de la figure ;
- la figure 8 représente, de façon similaire à la figure 2, le dispositif préhenseur de la figure 1 après pivotement des mors ;

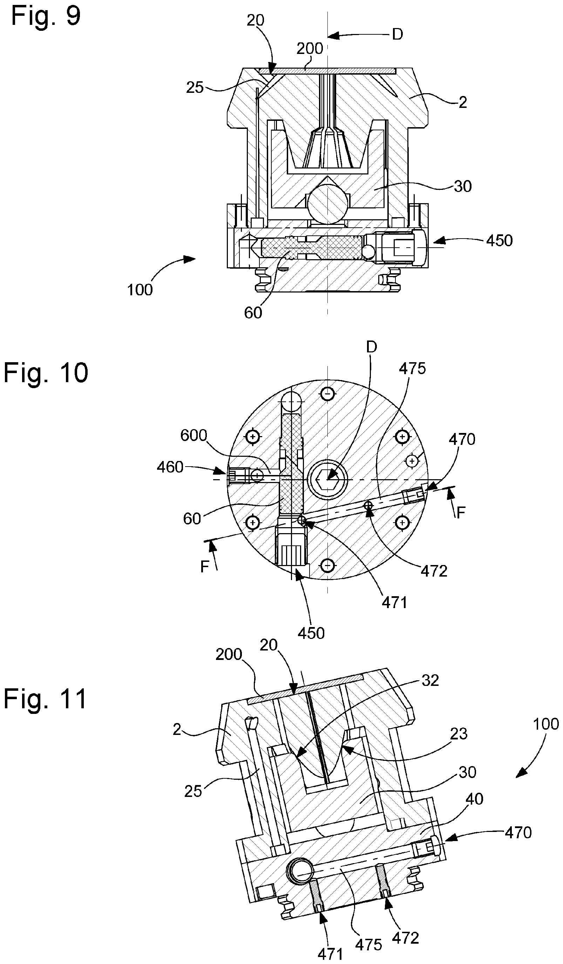

- la figure 9 représente, de façon similaire à la figure 7, le dispositif préhenseur de la figure 1 en vue en coupe selon la coupe C-C définie par la figure 8, et montre le venturi dans son canal ;
- la figure 10 représente le dispositif préhenseur de la figure 1 en vue en coupe selon le plan de coupe D-D défini par la figure 8, et montre le venturi dans son canal, ainsi que les canaux voisins de soufflage et d'évacuation ;
- la figure 11 représente le dispositif préhenseur de la figure 1 en vue en coupe selon le plan de coupe F-F défini par la figure 10, et montre le canal de soufflage avec ses deux pistes de soufflage, et une partie du conduit d'aspiration dans un des mors mobiles ;
- la figure 12 représente, de façon schématisée, éclatée et en vue de côté, les composants de base d'une pince élastique utilisable pour réaliser un dispositif préhenseur selon l'une des figures 1 à 11, avec un cône fermant ;
- la figure 13 représente, de façon schématisée, éclatée et en vue de côté, les composants de base d'une pince élastique utilisable pour réaliser un dispositif préhenseur selon une autre réalisation, avec un cône ouvrant.

### Description détaillée de l'invention

L'invention concerne un dispositif préhenseur 100 de maintien, centrage, et/ou serrage en pince d'un composant 200 de micromécanique ou d'horlogerie dans une chambre de serrage délimitée par une pince comportant au moins un mors mobile 2.

Plus particulièrement, et dans la version non limitative illustrée par les figures, l'invention concerne un préhenseur avec une pince à mors sensiblement concentriques, répartis autour d'un axe de pince D ; les principes de l'invention qui vont être décrits plus loin sont toutefois applicables à d'autres outillages de fabrication, de type étau, ou outillages spéciaux à mâchoires mobiles.

Dans les variantes non limitatives illustrées par les figures, l'invention est réalisée par la modification de pinces de serrage du marché (de type pince « Ottet » ou similaire) afin d'ajouter un maintien par dépression avec une grande compacité.

Le maintien par dépression permet plusieurs options, et notamment de :
- détourer un composant usiné issu d'un composant brut serré en pince, en maintenant par dépression ce composant usiné sur une empreinte de la pince, pendant que le reste du composant brut reste serré dans la pince ;
- augmenter la force de maintien du composant contre l'appui ;
- maintenir le composant en place, après le desserrage et la mise en position desserrée, en attendant par exemple qu'un opérateur ou un robot effectue une charge/décharge de composants.

L'exemple illustré concerne l'utilisation d'une pince standard comme base de serrage, avec la modification économique de pinces standards de type pince « Ottet » ou similaires.

Cette pince modifiée est prévue pour être assemblée sur une palette 40 dotée d'une interface 41 standard proposée par des fournisseurs comme « Erowa », « Yerly », « TG-Colin » ou autres, afin d'être interchangeable et d'équiper tout type de machine avec ce moyen de serrage. Dans une variante de réalisation, ce dispositif peut également être directement fixé sur un nez d'arbre quelconque.

Le serrage/desserrage des composants peut être effectué soit manuellement avec une vis, en dehors de la machine, soit automatiquement, par exemple et non limitativement avec une tige de commande équipée sur la machine.

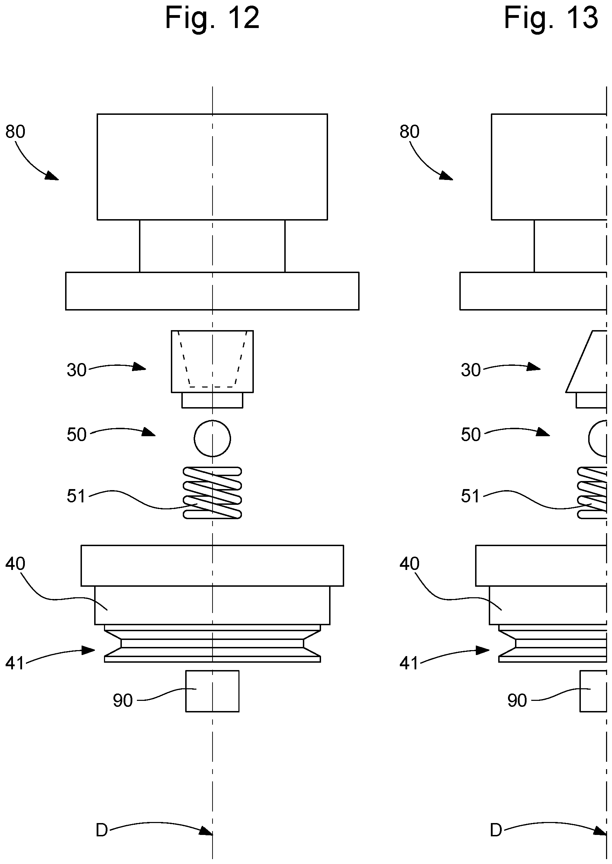

Le dispositif préhenseur 100 comporte un cône 30, qui est un élément qui permet de fermer, respectivement ouvrir, la pince, en fonction de sa forme fermant/ouvrant, tel que visible sur les figures 12 (cône fermant) et 13 (cône ouvrant).

L'actionnement des mors mobiles 2 est réalisé par la coopération entre d'une part le cône de commande 30 fermant ou ouvrant, mû via une vis de serrage 90 traversant la palette 40 et agencée pour pousser le moyen de poussée 50, notamment une bille ou un poussoir-navette, lequel est combiné à un moyen de rappel élastique 51 axial tel qu'un ressort, ce cône 30 comportant des surfaces coniques 32, et d'autre part des surfaces évolutives complémentaires 23, notamment des surfaces coniques que comportent les mors mobiles 2 incorporés dans la pince. Naturellement les surfaces coniques du cône 30 et des mors peuvent être remplacées par d'autres surfaces à profil évolutif.

Ainsi, selon l'invention, au moins un mors mobile 2, ou bien quand la pince comporte une pluralité de mors au moins une partie des mors mobiles 2 de la pince, comporte une surface de référence 20, qui est agencée pour un appui frontal direct d'un composant 200.

Et le dispositif préhenseur 100 comporte au moins un générateur de dépression 60 qui est agencé pour faire le vide dans la chambre de serrage par l'intermédiaire d'au moins un canal 25 ménagé dans au moins un mors mobile 2.

Plus particulièrement, le dispositif préhenseur 100 comporte, alignés selon un axe de pince D, une palette 40 comportant des moyens de préhension 41 agencés pour coopérer avec un outillage ou/et un manipulateur, et un dispositif actionneur agencé pour commander l'ouverture ou la fermeture de la pince.

Dans une exécution particulière, ce dispositif actionneur comporte une bague rotative autour de l'axe de pince D pour commander la fermeture de la pince, par poussée sur des mors mobiles 2 que comporte la pince.

Dans une autre exécution particulière illustrée par les figures, le dispositif préhenseur 100 comporte, selon l'axe de pince D, au travers de cette palette 40 ou autour d'elle un moyen de manœuvre 90, tel qu'une vis, un écrou, ou une tige de poussée ou de traction, pour actionner des moyens de poussée 50 sur support élastique, et un cône 30 fermant ou ouvrant, comportant des surfaces évolutives 32, notamment coniques, qui sont agencées pour coopérer avec des surfaces complémentaires 23 que comportent les mors mobiles 2, et qui constituent des surfaces d'actionnement de la pince.

Plus particulièrement, le dispositif préhenseur 100 comporte au moins un générateur de dépression 60 agencé pour faire le vide dans la chambre de serrage par l'intermédiaire d'au moins un canal 25 ménagé dans au moins un mors mobile 2. Cet au moins un générateur de dépression 60 comporte plus particulièrement une cartouche de venturi, qui est positionnée entre un circuit d'entrée de soufflage d'air par au moins une piste de soufflage 471, 472, un circuit de sortie d'air 460, et une zone d'aspiration 600 dans laquelle est créée, lors d'un soufflage d'air en entrée, une dépression transmise à la chambre de serrage par cet au moins un canal 25.

Avantageusement le dispositif préhenseur 100 comporte le générateur de dépression 60 comportant une cartouche de venturi logée dans un orifice principal 450, et des orifices annexes 460, 470, définissant des canaux de circulation d'air dont au moins un canal de soufflage 475 alimenté par au moins une piste de soufflage 471, 472.

Plus particulièrement, c'est la palette 40 qui comporte le générateur de dépression 60 comportant une cartouche de venturi logée dans un canal 45 avec un orifice principal 450, et des orifices annexes 460, 470, définissant des canaux de circulation d'air, dont au moins un canal de soufflage 475 alimenté par au moins une piste de soufflage 471, 472 ; dans une exécution particulière non limitative, cette au moins une piste et ces orifices sont limités par des clapets anti-retour 476 et/ou des bouchons.

Dans une autre variante, certains de ces orifices sont maintenus ouverts.

Dans une exécution particulière illustrée par les figures, le dispositif préhenseur 100 comporte uniquement des mors mobiles 2.

Une pression de soufflage comprise entre 4 et 6 bars au niveau des pistes de soufflage 471 et 472 permet, avec un venturi « FESTO » de type « VN-05-H » ou « VN-05-L », dans un logement de diamètre 6 mm, d'atteindre la dépression souhaitée dans la chambre.

Concernant le moyen de serrage des pinces, le dessin présente une vis comme moyen de serrage/desserrage manuel. Toutefois, si la machine est équipée d'une tige de commande qui passe au centre de la palette, alors la tige de commande peut remplacer la vis comme moyen de serrage/desserrage automatique si elle est assez puissante.

L'invention concerne encore un procédé de fixation d'un composant 200 de micromécanique ou d'horlogerie dans la chambre de serrage d'un tel dispositif préhenseur 100, selon lequel : on dispose sur la surface de référence 20 le composant 200 directement en appui sur des orifices d'un réseau en dépression débouchant des mors mobiles 2 au niveau de cette surface de référence 20, puis on effectue un premier maintien par dépression, puis un deuxième maintien de couple supérieur à celui du premier maintien par pivotement des mors mobiles 2.

Naturellement, l'indexation en position, et en particulier en position angulaire du composant 200 peut être réalisée par tout moyen, le plus simple et le moins coûteux étant la goupille. Dans une variante, si on travaille avec un brut standardisé qui possède une référence telle qu'une encoche par exemple, il peut être avantageux d'avoir une orientation dans les mors. La solution illustrée permet de reprendre le composant usiné 200 une fois détouré, si on a besoin de retoucher la pièce terminée par exemple.

Plus particulièrement, on équipe le dispositif préhenseur 100 d'au moins un générateur de dépression 60, on maintient un composant 200 qui est un brut dans les mors mobiles 2, on détoure dans ce brut un composant usiné, qu'on maintient par dépression avant sa récupération par un opérateur ou par un manipulateur robotisé.

En somme, l'invention permet la confection économique d'un dispositif préhenseur garantissant un bon serrage du composant ; notamment elle peut être réalisée par la modification d'un moyen de serrage standard reconnu et répandu, tel une pince de type pince « Ottet » ou similaire.

L'invention apporte un gain en précision d'usinage, notamment pour les reprises d'usinage, car l'appui de référence permet une meilleure répétabilité de positionnement.

L'invention offre la possibilité de bénéficier du vide pour différentes fonctions : détourage complet d'un composant usiné, amélioration du maintien du composant, maintien d'un composant avec pinces desserrées.

La compacité de l'invention s'inscrit parfaitement dans la tendance de miniaturisation des moyens d'usinage de micromécanique, avec un encombrement qui répond justement aux besoins dimensionnels des micromachines actuelles tout en intégrant des fonctionnalités complémentaires.

## Revendications

1. Dispositif préhenseur (100) de maintien, centrage, et/ou serrage en pince d'un composant (200) de micromécanique ou d'horlogerie dans une chambre de serrage délimitée par une pince comportant au moins un mors mobile (2), **caractérisé en ce que** ledit au moins un mors mobile (2), ou, quand ladite pince comporte une pluralité de mors au moins une partie desdits mors mobiles (2), comporte une surface de référence (20) agencée pour un appui frontal direct d'un dit composant (200), et **en ce que** ledit dispositif préhenseur (100) comporte au moins un générateur de dépression (60) agencé pour faire le vide dans ladite chambre de serrage par l'intermédiaire d'au moins un canal (25) ménagé dans au moins un dit mors mobile (2).

2. Dispositif préhenseur (100) selon la revendication 1, **caractérisé en ce que** ledit dispositif préhenseur (100) comporte, alignés selon un axe de pince (D), une palette (40) comportant des moyens de préhension (41) agencés pour coopérer avec un outillage ou/et un manipulateur, et un dispositif actionneur agencé pour commander l'ouverture ou la fermeture de ladite pince.

3. Dispositif préhenseur (100) selon la revendication 1, **caractérisé en ce que** ledit dispositif préhenseur (100) comporte, alignés selon un axe de pince (D), une palette (40) comportant des moyens de préhension (41) agencés pour coopérer avec un outillage ou/et un manipulateur, et ledit dispositif actionneur qui comporte une bague rotative autour dudit axe de pince (D) pour commander la fermeture de ladite pince, par poussée sur des dits mors mobiles (2) que comporte ladite pince.

4. Dispositif préhenseur (100) selon la revendication 1, **caractérisé en ce que** ledit dispositif préhenseur (100) comporte, alignés selon un axe de pince (D), une palette (40) comportant des moyens de préhension (41) agencés pour coopérer avec un outillage ou/et un manipulateur, et un dit dispositif actionneur qui comporte des moyens de poussée (50) sur support élastique, un cône (30) fermant ou ouvrant, comportant des surfaces coniques (32) agencées pour coopérer avec des surfaces complémentaire (23) que comportent lesdits mors mobiles (2) et qui constituent des surfaces d'actionnement de ladite pince.

5. Dispositif préhenseur (100) selon l'une des revendications 1 à 4, **caractérisé en ce que** ledit dispositif préhenseur (100) comporte au moins un générateur de dépression (60) agencé pour faire le vide dans ladite chambre de serrage par l'intermédiaire d'au moins un canal (25) ménagé dans lesdits mors mobiles (2), ledit au moins un générateur de dépression (60) comportant une cartouche de venturi positionnée entre un circuit d'entrée de soufflage d'air par au moins une piste de soufflage (471, 472) et une zone d'aspiration (600) dans laquelle est créée, lors d'un soufflage d'air en entrée, une dépression transmise à ladite chambre de serrage par ledit au moins un canal (25).

6. Dispositif préhenseur (100) selon la revendication 6, **caractérisé en ce que** ledit dispositif préhenseur (100) comporte ledit générateur de dépression (60) comportant une cartouche de venturi logée dans un orifice principal (450), et des orifices annexes (460, 470) définissant des canaux de circulation d'air dont au moins un canal de soufflage (475) alimenté par au moins une dite piste de soufflage (471, 472).

7. Dispositif préhenseur (100) selon les revendications 2 et 7, **caractérisé en ce que** ladite palette (40) comporte ledit générateur de dépression (60), ladite cartouche de venturi, ledit orifice principal (450), lesdits orifices annexes (460, 470), ledit canal de soufflage (475), ladite au moins une dite piste de soufflage (471, 472), lesdits clapets anti-retour (476), lesdites piste et lesdits orifices étant limitables par des clapets anti-retour (476) ou des bouchons.

8. Procédé de fixation d'un composant (200) de micromécanique ou d'horlogerie dans la chambre de serrage d'un dispositif préhenseur (100) selon l'une des revendications 1 à 7, selon lequel : on dispose sur ladite surface de référence (20) ledit composant (200) directement en appui sur des orifices d'un réseau en dépression débouchant de mors mobiles (2) au niveau de ladite surface de référence (20), puis on effectue un premier maintien par dépression, puis un deuxième maintien de couple supérieur à celui dudit premier maintien par pivotement desdits mors mobiles (2).

9. Procédé de fixation selon la revendication 10, selon lequel on maintient un composant (200) qui est un brut dans lesdits mors mobiles (2), on détoure dans ce dit brut un composant usiné, qu'on maintient par dépression avant sa récupération par un opérateur ou par un manipulateur robotisé.
